# FASCICULE DE BREVET EUROPEEN

(11) **EP 3 773 322 B1**
(45) Date de publication et mention de la délivrance du brevet: **04.09.2024**
(21) Numéro de dépôt: 19722666.5
(22) Date de dépôt: 11.04.2019
(51) Int. Cl.: A61C 7/14, A61C 7/16, A61C 7/28, A61C 13/00, B29C 64/10

(54) **ORTHESE DENTAIRE**
ZAHNORTHESE
DENTAL ORTHOSIS

(30) Priorité: 11.04.2018 FR 1853153
(43) Date de publication de la demande: 17.02.2021
(73) Titulaire: Orthomoov, 13510 Eguilles (FR)
(72) Inventeur: DOSDA, Frédéric, 73200 Gilly-sur-Isère (FR); PELLAT, Philippe, 84120 Pertuis (FR); MARCHADIER, Arnaud, 13600 Ceyreste (FR)
(74) Mandataire: Med'inVent Consulting
(86) Numéro de dépôt international: PCT/FR2019/050858
(87) Numéro de publication internationale: WO 2019/197784

(56) Documents cités:
- WO-A1-2013/134031
- CN-A- 102 178 563
- CN-U- 202 136 432
- US-B2- 9 566 133

## Description

L'invention concerne le domaine des dispositifs ou orthèses dentaires. De tels dispositifs ou orthèses sont utilisés pour tous types d'usage et préférentiellement mais non limitativement, en lien avec la transmission précise d'efforts mécaniques nécessaire au contrôle d'un ou plusieurs déplacements dentaires, dans le cadre notamment de l'emploi d'un appareil dentaire, plus particulièrement d'appareillage orthodontique.

Au sens de l'invention et dans tout le document, à des fins de simplification, les termes « orthèse dentaire » ou « orthèse orthodontique » et « dispositif dentaire » ou « dispositif orthodontique » seront indifféremment employés.

Bien que les opinions aient considérablement évolué au cours des dernières décennies, il est encore, à l'heure actuelle, difficile d'accepter un traitement orthodontique pour nombre de personnes, que ce soit pour les plus jeunes comme pour les adultes. Et pourtant, bien que le port d'un appareil dentaire ne soit généralement pas agréable et soit également bien souvent redouté, l'utilité de ces traitements orthodontiques n'est plus à démontrer.

L'orthodontie étudie la forme, la position et le fonctionnement des dents et/ou des arcades dentaires et permet, par ses diverses applications, de modifier lesdites dents et/ou arcades dentaires pour notamment assurer leur santé, embellir leur apparence et améliorer leurs fonctions. L'orthodontie consiste ainsi en une technique de correction des mauvaises postures d'une ou plusieurs mâchoires et/ou dents, afin notamment d'optimiser l'équilibre postural entre les structures osseuses, l'occlusion, ainsi que le développement des bases osseuses dans un but fonctionnel et esthétique. Elle vise plus particulièrement à déplacer les dents, plus particulièrement les couronnes dentaires, dans les trois directions déterminées de l'espace afin d'établir une occlusion esthétique, fonctionnelle et équilibrée. Une couronne dentaire est définie généralement par cinq faces : une face occlusale, une face linguale, une face vestibulaire, une face mésiale et une face distale. Le contrôle d'un déplacement dentaire nécessite généralement l'association appropriée de forces et/ou de moments appliqués sur tout ou partie de la ou des couronnes respectives des dents à déplacer. Le ou lesdits déplacements sont généralement réalisés selon différentes informations liées à des ordres, également qualifiés de « courbures ». En terme orthodontique, un ordre correspond à un angle destiné à décrire une ou plusieurs déformations susceptibles d'être exécutées sur un arc ou fil orthodontique de section rectangulaire ou cylindrique. On définit ainsi trois ordres :
- un premier ordre consistant en une déformation exécutée dans le plan occlusal,
- un deuxième ordre consistant en une déformation exécutée dans une direction verticale,
- un troisième ordre consistant en une déformation par torsion de l'arc sur chant.

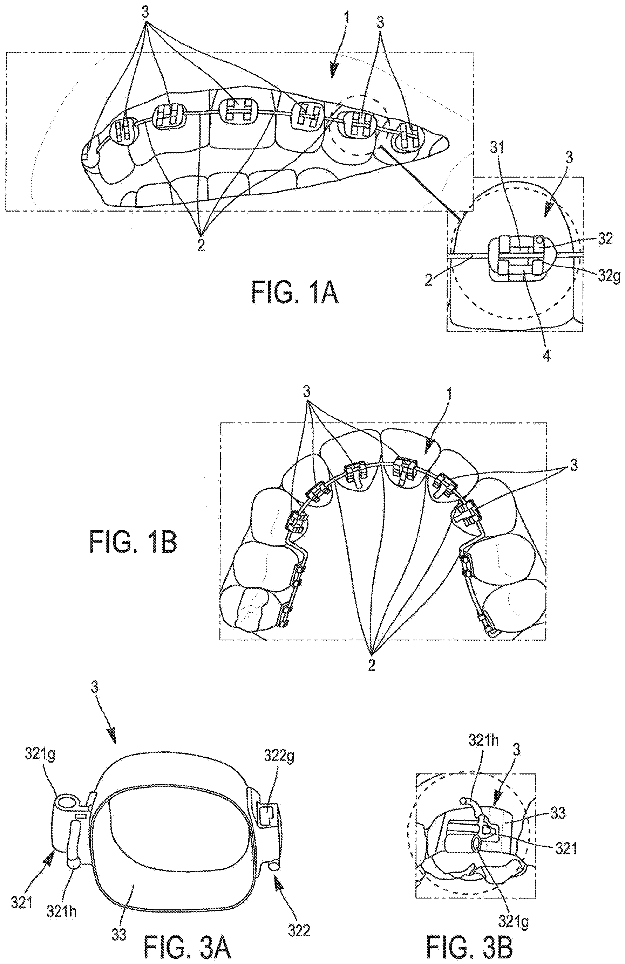

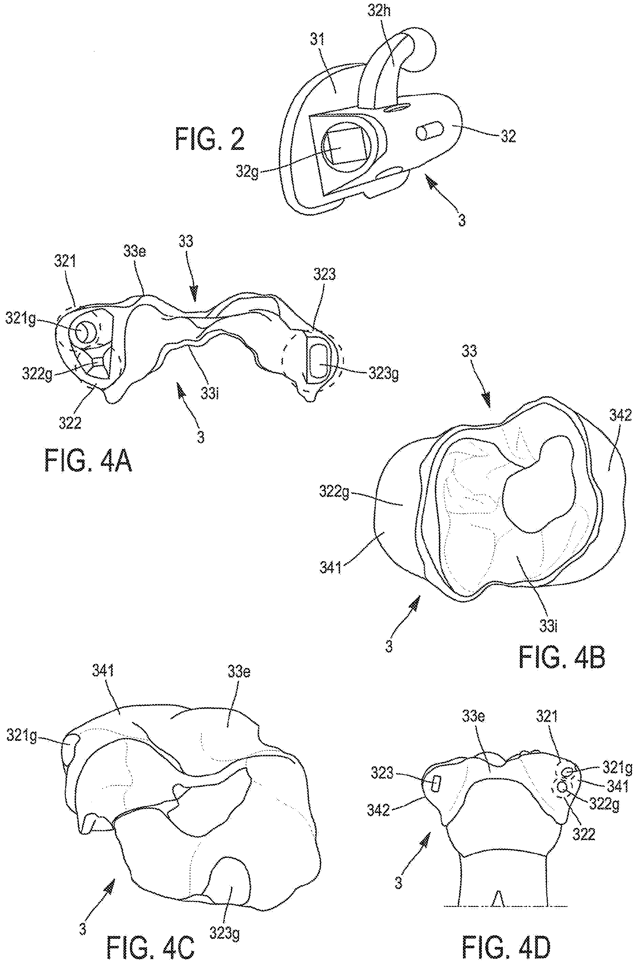

Pour permettre un tel contrôle et finalement un déplacement d'une ou plusieurs dents, les techniques orthodontiques actuelles sont basées sur l'emploi d'appareils orthodontiques. Les figures 1A et 1B présentent deux modes de réalisation d'appareils orthodontiques connus et mis en place dans la bouche d'un utilisateur ou patient, respectivement dans le cas d'une technique vestibulaire et dans le cas d'une technique linguale. Un tel appareil orthodontique 1 comprend généralement au moins un fil métallique 2, également qualifié d'« arc orthodontique », agencé pour exercer un effort sur les dents, permettant ainsi de guider et de délivrer la force nécessaire à un déplacement dentaire tendant à amener les dents à une position finale satisfaisante. Au sens de l'invention et dans tout le document, le terme « arc orthodontique » est entendu comme un fil de traitement, mais également tout élément permettant d'exercer une force extra-orale (également connue sous la terminologie « force extra-buccale » et respectivement sous les acronymes « FEO ou FEB »). Ledit appareil orthodontique 1 comporte en outre plusieurs attaches 3, également connues sous le terme de « verrous » ou encore la terminologie anglo-saxonne de « brackets », que nous nommerons par simplification « orthèse dentaire » dans la suite du document, positionnées sur l'une des faces des couronnes respectives de dents, par exemple, selon un premier mode de réalisation décrit en lien avec la figure 1A, sur leur face vestibulaire ou encore, selon un deuxième mode de réalisation décrit en lien avec la figure 1B, sur leur face linguale. La position des orthèses dentaires sur une face privilégiée des couronnes dépend principalement du traitement orthodontique privilégié par le praticien et/ou d'un choix esthétique imposé par l'utilisateur ou le patient. Chaque orthèse dentaire 3 présente ou comprend avantageusement une attache 32 présentant elle-même une gorge 32g, généralement de section rectangulaire ou carré (également connue sous la terminologie anglo-saxonne « Edgewise »), agencée pour accueillir un arc orthodontique et permettre alors audit arc orthodontique 2 le transfert des efforts sur la dent, afin d'assurer le déplacement adéquat de ladite dent pendant le traitement. Comme d'ores et déjà mentionné, le transfert des efforts sur la dent est avantageusement déterminé en fonction d'informations liées aux premier, deuxième et troisième ordres précédemment décrits. En variante, tel que nous le décrirons ultérieurement en lien avec la figure 2, l'attache 32 peut éventuellement présenter une forme tubulaire ou cylindrique, de section circulaire ou rectangulaire. On parle alors d'attache tubulaire. Ledit appareil orthodontique 1 comportent également plusieurs ligatures 4 consistant en des dispositifs permettant de maintenir l'arc orthodontique 2 dans des gorges 32g respectives des orthèses dentaires 3. De telles ligatures 4 peuvent être principalement constitués d'acier ou, en variante, selon le premier mode de réalisation décrit en lien avec la figure 1A, en élastomère.

Lors de la mise en place d'un traitement orthodontique, comme décrit notamment en lien avec la figure 1A, plusieurs orthèses dentaires 3 sont fixées individuellement à chacune des couronnes dentaires d'une arcade dentaire dans une position déterminée. Afin d'assurer un positionnement adéquat de l'attache sur la couronne dentaire, une telle fixation peut être réalisée, selon un premier mode de réalisation décrit en lien avec la figure 2, par l'intermédiaire d'une base 31, c'est-à-dire d'un objet ou élément intermédiaire dont une surface épouse la face vestibulaire de la couronne dentaire par collage et dont l'autre surface coopère avec l'attache 32, ladite attache 32 présentant au moins une gorge 32g. On parle alors d'orthèse dentaire sous la forme d'un ensemble base/attache, également connu. Selon le premier mode de réalisation décrit en lien avec la figure 2, l'attache 32 comprend également un crochet 32h, agencé pour coopérer avec un élément additionnel de contrainte, tel un élastique.

En variante, d'autres orthèses dentaires, telles que, selon l'exemple de réalisation décrit en lien avec les figures 3A et 3B, une bague orthodontique 3, peuvent être employées pour permettre la fixation d'une ou plusieurs attaches, notamment lorsque les efforts mécaniques nécessaires au déplacement dentaire et plus généralement à un traitement orthodontique sont importants, lorsque la couronne dentaire est recouverte d'amalgame ou d'autres métaux, après, par exemple, la mise en place d'une couronne métallique, et que la surface d'émail disponible sur la couronne dentaire n'est pas suffisante pour y coller une attache régulière, telle qu'un ensemble base/attache précédemment décrit. En effet, les bagues orthodontiques présentent divers avantages. De telles bagues orthodontiques résistent mieux aux contraintes exercées émanant d'un traumatisme occlusal, d'une mastication inadaptée et/ou de l'application d'une force externe excessive sur des arcs orthodontiques ou les attaches. Lesdites bagues 3 permettent en outre la mise en place d'éléments auxiliaires de traitement amovibles, tels qu'à titre d'exemples non limitatif, une force extra-orale, un arc transpalatin, un ressort du pendulum à l'arcade maxillaire ou encore un « lip bumper » aux arcades maxillaire et/ou mandibulaire. En outre, de telles bagues 3 peuvent être mises en place sur une couronne dentaire pour laquelle le séchage, lorsqu'une colle est employée est difficile à obtenir. De telles bagues orthodontiques 3 sont généralement fabriquées en acier inoxydable ou en alliage précieux et peuvent être fixées sur une couronne dentaire molaire d'un patient au moyen par exemple, d'un ciment peu sensible à l'humidité.

Selon un deuxième mode de réalisation décrit en lien avec les figures 3A et 3B, une orthèse dentaire 3 sous la forme d'une bague orthodontique comporte une bague ou un anneau 33 métallique préformé, c'est-à-dire un ruban métallique façonné en forme d'anneau enserrant la couronne dentaire. Une telle bague préformée 33 est généralement fabriquée industriellement, c'est-à-dire en grande quantité, dans de multiples tailles déterminées et sera, lors du traitement orthodontique, choisie en fonction de l'anatomie du patient, plus particulièrement selon l'anatomie de la couronne dentaire. Il en résulte un jeu résiduel entre la bague et la couronne dentaire qui est en règle générale comblé par un ciment de scellement. Toujours selon la figure 3, une telle bague préformée 33 coopèrent par soudure, c'est-à-dire sans degré de liberté, avec deux attaches tubulaires 321, 322, c'est-à-dire deux attaches présentant respectivement deux lumières sensiblement tubulaires, lesdites attaches 321, 322 étant agencées pour accueillir chacune un arc orthodontique et positionnées face à la face vestibulaire, également qualifiée de face externe, et/ou à la face linguale, également qualifiée de face interne ou palatine, de la couronne dentaire sur laquelle la bague 33 est mise en place. Contrairement à une attache conventionnelle présentant une gorge, une attache tubulaire définit une lumière. Au sens de l'invention et dans tout le document, on entend par « lumière » tout orifice, évidement ou cavité central débouchant, aménagé dans l'attache afin d'y permettre le passage, voire le maintien d'un arc orthodontique 2. Une telle attache tubulaire présente alors une paroi interne cylindrique ou une paroi comportant des sections planes sensiblement parallèles à un axe longitudinal de la lumière de l'attache, comme cela est le cas pour une lumière à section rectangulaire par exemple. Au niveau de la face externe de la bague 33 d'une orthèse dentaire, telle que celle décrit en lien avec les figures 3A et 3B, les attaches tubulaires 321, 322 peuvent présenter deux types de tubes : un tube présentant une lumière 322g de section sensiblement rectangulaire agencé pour recevoir un arc orthodontique et être positionné sur au moins une molaire terminale appareillée d'une arcade dentaire, et/ou un tube présentant une lumière 321g de section sensiblement circulaire agencé pour recevoir un auxiliaire de traitement. Au niveau de la bague 33 d'une orthèse dentaire, les attaches tubulaires 321, 322 peuvent présenter un tube de toute section, un tel tube étant agencé pour connecter un auxiliaire ou un fil de traitement. En comparaison des attaches conventionnelles présentant des gorges, de telles attaches tubulaires présentent divers avantages, parmi lesquels nous pouvons notamment citer : une mise en place sécurisée et adaptée d'un arc orthodontique sur une couronne dentaire d'accès dite difficile, puisque peu accessible, ainsi que l'absence de nécessité d'emploi d'une ligature pour maintenir un arc orthodontique au sein de l'attache tubulaire, contrairement à une attache comportant une gorge.

D'autres exemples de réalisation d'orthèses dentaire selon l'état de la technique sont décrits dans les modèles d'utilité chinois publié sous les numéros CN202136432U et CN1021178563U.

Plus en détail, CN202136432U divulgue une orthèse dentaire linguale, comportant un corps présentant une attache présentant une lumière et coopérant sans degré de liberté avec la surface externe dudit corps, la surface externe dudit corps comporte une protubérance régulière, ladite protubérance étant agencée pour constituer ladite attache par retrait de matière, ledit corps et ladite protubérance sont faits d'une seule pièce. 1

Bien que répondant à certaines difficultés liées à l'anatomie intrinsèque de l'arcade dentaire d'un patient, de telles attaches tubulaires présentent un certain nombre d'inconvénients. Plus particulièrement, l'absence de ligature, de par la structure desdites attaches, occasionne la création d'un jeu entre l'arc orthodontique et la ou les attaches tubulaires, entraînant une perte de lecture des informations relatives aux premier, deuxième et troisième ordres présentes dans la bague et altérant finalement le traitement orthodontique. Bien qu'un jeu entre l'arc orthodontique et la ou les attaches tubulaires soit généralement nécessaire au début d'un traitement orthodontique, notamment pour permettre une adaptation du patient audit traitement, ledit jeu se doit d'être le plus faible possible pour assurer un déplacement dentaire en adéquation avec le traitement orthodontique prescrit. Plusieurs facteurs sont à l'origine de ce jeu, tels que par exemple, les dimensions, plus particulièrement la taille, de l'arc orthodontique et les dimensions de la lumière ou de l'évidement. En effet, pour des raisons pratiques, les fabricants industriels conçoivent généralement des arcs orthodontiques, dont les dimensions ne sont généralement pas en adéquation avec une côte optimale pour insérer ledit arc dans l'attache. De la même manière, les fabricants industriels conçoivent généralement des gorges ou tubes dont les tolérances en matière de dimensions et d'informations relatives aux premier, deuxième et troisième ordres ne sont pas forcément en adéquation avec les valeurs réelles. Les gorges ou tubes sont ainsi souvent surdimensionnées pour permettre et faciliter l'insertion de l'arc orthodontique dans la gorge ou le tube par le praticien. En outre, la gorge ou le tube, devant présenter une forme en U, c'est-à-dire à fond plat, présente également des variations de dimensions entre son sommet et sa base.

Comme d'ores et déjà mentionné, bien qu'un tel jeu soit nécessaire, ce dernier ne doit pas dépasser un angle critique Θ_{c}. Au-delà le jeu réduit, voire annule, le traitement orthodontique. En effet, plus l'angle créé par le jeu augmente, plus la déformation de l'arc orthodontique augmente. Par ailleurs, plus la force nécessaire au déplacement augmente, plus la largeur de l'arc orthodontique augmente, et finalement plus la taille de l'arc orthodontique augmente et plus l'angle critique décroit. Il est ainsi nécessaire d'employer une attache tubulaire suffisamment longue, au minimum trois millimètres, et conçue de façon précise pour obtenir un contrôle optimal du déplacement dentaire.

En outre, le positionnement de l'attache tubulaire au regard de la couronne dentaire joue un rôle prépondérant. En effet, la distance séparant le fond du tube de la dent détermine la position horizontale d'une dent par rapport à une autre. Obtenir un alignement de tous les points de contact des dents d'une arcade dentaire d'un patient est une nécessité fonctionnelle. Il est ainsi nécessaire que la distance séparant le fond de la gorge à la face vestibulaire d'une dent soit adaptée à cette anatomie. Cette contrainte est généralement difficile à respecter avec des orthèses dentaires sous la forme de bagues conventionnelles préformées, telle que la bague 33 décrite plus particulièrement en lien avec la figure 3A, notamment du fait des difficultés qu'imposent l'essayage et/ou la mise en place de telles bagues préformées.

Par ailleurs, une orthèse dentaire sous la forme d'une bague préformée présente également un certain nombre d'inconvénients. En effet, une telle orthèse dentaire sous la forme d'une bague préformée, de par sa conception notamment, n'assure pas un positionnement parfaitement adapté à la morphologie de la couronne dentaire du patient ou de l'utilisateur sur laquelle l'orthèse est mise place. En conséquence, un positionnement inadapté de ladite bague préformée impacte directement la qualité et/ou l'efficacité du traitement orthodontique. Par ailleurs, choisir une taille adaptée de bague préformée requiert une certaine expérience et/ou une certaine dextérité de la part d'un praticien, l'efficacité du traitement pouvant être amoindrie par un choix hasardeux dudit praticien. La mise en place d'une ou plusieurs bagues préformées respectivement sur une ou plusieurs couronnes dentaires, plus particulièrement le passage du point de contact d'une bague autour d'une couronne dentaire, est souvent douloureuse pour un patient, l'espace inter dentaire étant, si ce n'est quasiment nul, généralement inférieur à l'épaisseur de la bague préformée. Pour assurer une mise en place optimale d'une ou plusieurs bagues préformées, un patient et un praticien doivent généralement convenir d'une séance préalable pour la mise en place de séparateurs, permettant la création et/ou l'augmentation d'un espace entre les couronnes dentaires, augmentant l'inconfort du patient. Par ailleurs, de par son agencement et l'emploi de composants supplémentaires pour assurer un positionnement optimal, dans le cas où une bague préformée devait être retirée et replacée, la reproductibilité de remise en place de la bague est généralement difficile à obtenir.

En conséquence, l'ajustement d'une bague préformée sur une couronne dentaire d'un patient n'est généralement pas optimal, une telle bague étant classiquement surdimensionnée au regard de la couronne dentaire. Pour compenser un tel surdimensionnement, le praticien emploie un joint de colle, généralement plus épais, qui vient compenser alors le défaut. Toutefois, l'emploi d'un tel joint de colle entraîne alors une tenue de moindre qualité, avec un risque potentiel d'infiltration et finalement un risque d'attaques carieuses. De plus, au cours d'un traitement orthodontique, il peut être nécessaire d'insérer et/ou désinsérer, que ce soit par le praticien ou par le patient, des auxiliaires, tels qu'un arc orthodontique, au sein de la ou des attaches de la bague préformée. De telles insertions et/ou désinsertions engendrent ainsi des micromouvements, susceptibles in fine d'entraîner un décollement de l'orthèse dentaire.

Par ailleurs, les bagues préformées étant conçues à l'échelle industrielle, le choix des attaches, plus particulièrement des informations relatives aux premier, deuxième et troisième ordres nécessaires au traitement orthodontique, est généralement conditionné aux offres proposées par les fabricants, bien souvent limitées, qui, selon les cas, ne sont pas toujours applicables au traitement orthodontique ou ne sont pas toujours optimales pour certains patients. Également, de par une conception et une production à l'échelle industrielle, la position de l'attache tubulaire n'est pas toujours adaptée aux besoins d'un traitement orthodontique personnalisé. Elle oblige ainsi le praticien à modifier l'arc orthodontique pour pallier à cette imprécision, entraînant encore des difficultés supplémentaires. En outre, de par sa conception et son agencement particuliers, une telle bague préformée, destinée à être placée dans la bouche d'un patient durant un certain temps, est généralement inconfortable pour le patient, voire même blesse les tissus buccaux. En effet, ladite bague préformée présente généralement des formes relativement pointues et/ou des aspérités dues à la présence d'attaches coopérant avec l'anneau.

Face aux divers inconvénients présentés en lien avec les bagues 33 orthodontiques préformées, des scientifiques ont tenté de développer des orthèses dentaires sous la forme de bagues customisées, c'est-à-dire adaptées homothétiquement au patient ou utilisateur, plus particulièrement à la couronne dentaire sur laquelle une telle bague individualisée peut être mise en place, lesdites bagues étant fabriquées par moulage en cire perdue. De telles bagues customisées sont généralement fabriquées sur mesure et parfaitement adaptées à la morphologie de la couronne dentaire.

Toutefois, de telles orthèses dentaires, sous la forme de bagues customisées et fabriquées par moulage en cire perdue, présentent à l'instar des bagues préformées un certain nombre d'inconvénients. En effet, les procédés de fabrication par moulage en cire perdue ne permettent généralement pas d'atteindre des résultats aussi optimaux et fins en comparaison à ceux obtenus avec des technologies d'impression ou d'usinage métallique. En outre, l'adjonction d'attaches métalliques surmoulées à la maquette en cire permet d'obtenir des orthèses dentaires consistant en des bagues à attaches tubulaires, à l'instar des bagues préformées. Toutefois, l'adjonction d'une ou plusieurs attaches augmente de façon importante le volume final de l'orthèse dentaire. Par conséquent, l'injection d'un métal pour fabriquer ladite orthèse dentaire, nécessite dans bien des cas, de par ses limites, un ré-usinage final de la ou des attaches présentant une ou plusieurs gorges et/ou tubes. Un tel ré-usinage augmente ainsi considérablement les coûts et temps de fabrication de telles orthèses dentaires. Également, Les contraintes technologiques liées à l'emploi de procédé de fabrication par moulage en cire perdue imposent d'utiliser des alliages de métaux plus mous, éventuellement précieux. L'emploi de tels alliages de métaux peuvent éventuellement poser des difficultés lors de la fabrication de l'orthèse dentaire en fin du procédé.

En variante, afin de pallier aux divers inconvénients présentés en lien avec les bagues orthodontiques préformées et/ou customisées par moulage en cire perdue, d'autres chercheurs ont tenté de développer des orthèses dentaires sous la forme de bagues individualisées, c'est-à-dire adaptées homothétiquement au patient ou utilisateur, plus particulièrement la couronne dentaire sur laquelle une telle bague individualisée peut être mise en place, lesdites bagues étant fabriquées par usinage, injection ou encore fabrication additive. De telles bagues individualisées sont généralement fabriquées sur mesure et parfaitement adaptées à la morphologie de la couronne dentaire d'un patient. Elles sont fabriquées par impression ou usinage tridimensionnel (3D) de matériaux ou d'alliages métalliques destinés à l'orthodontie. Les techniques de fabrication permettent ainsi de réaliser des orthèses dentaires de très faibles épaisseurs, permettant ainsi un confort accru du patient. Outre la bague individualisée, de telles orthèses dentaires peuvent comporter une ou plusieurs attaches orthodontiques à gorges, avantageusement intégrées et/ou soudées auxdites bagues individualisées.

Toutefois, de telles orthèses dentaires, sous la forme de bagues individualisées, présentent à l'instar des bagues préformées un certain nombre d'inconvénients, tout comme des orthèses dentaires sous la forme de bagues customisées ou préformées. En effet, les procédés de fabrication actuels de telles bagues individualisées ne permettent pas de fabriquer une orthèse dentaire comportant une bague individualisée coopérant avec une ou plusieurs attaches tubulaires en une seule pièce ou une seule opération. Une fois la bague imprimée, il est généralement nécessaire de souder une attache tubulaire fabriquée industriellement sur ladite bague imprimée. En effet, les technologies actuelles de fabrication des orthèses dentaires imposent d'avoir des supports de construction à l'intérieur des tubes et ceux-ci ne peuvent être éliminés après fabrication sans altérer ou déformer la forme et/ou l'état de surface de l'attache tubulaire destinée à être en contact avec l'arc orthodontique. A l'instar des bagues préformées, de telles bagues individualisées présentent des aspérités qui rendent les bagues inconfortables pour les patients qui les portent, voire même, dans certains cas, blessantes.

L'invention permet de répondre à tout ou partie des inconvénients soulevés par les solutions connues.

Parmi les nombreux avantages apportés par l'invention, nous pouvons mentionner que celle-ci :
- propose un dispositif sous la forme d'une orthèse dentaire individualisée, conçue de manière numérique et adaptée à l'anatomie d'un patient, améliorant l'hygiène et le confort dudit patient, réduisant les risques de décollage éventuel accidentel ;
- offre une orthèse dentaire assurant un placement optimal des attaches de ladite orthèse par une orientation déterminée desdites attaches et adaptée au traitement orthodontique souhaité ;
- diminue le nombre de rendez-vous au sein des cabinets, en réduisant le temps de mise en place d'une telle orthèse dentaire, et ainsi les coûts inhérents au traitement orthodontique.

A cette fin l'objet de l'invention porte sur une orthèse dentaire selon la revendication 1. Pour offrir à un patient un traitement orthodontique individualisé dont le confort et l'hygiène sont grandement améliorés et pour permettre une transmission précise d'efforts mécaniques nécessaires lors dudit traitement orthodontique, la surface interne dudit corps est agencée pour recouvrir homothétiquement au moins une partie de trois faces de ladite couronne dentaire dudit patient, une première face consistant en la face vestibulaire, une deuxième face consistant en la face linguale et une troisième face choisie parmi la la face occlusale, la face distale et la face mésiale, ladite attache étant agencée pour être positionnée sur la face vestibulaire de la couronne dentaire. Par ailleurs, la surface externe dudit corps comporte une protubérance régulière, ladite protubérance étant agencée pour constituer ladite attache par retrait de matière. Enfin, ledit corps et ladite protubérance sont faits d'une seule pièce.

De manière avantageuse, la protubérance d'une orthèse dentaire conforme à l'invention peut être convexe.

Préférentiellement mais non limitativement, pour faciliter l'ancrage d'une orthèse dentaire conforme à l'invention et améliorer le confort d'un patient portant cette dernière, la surface interne du corps de ladite orthèse dentaire conforme à l'invention peut être agencée pour recouvrir homothétiquement une partie de la face occlusale et une partie de la face linguale et une partie de la face vestibulaire de ladite couronne dentaire dudit patient.

De manière avantageuse mais non limitative, la lumière de l'attache d'une orthèse dentaire conforme à l'invention peut être avantageusement tubulaire de section circulaire ou rectangulaire.

En variante ou en complément, pour réduire ou éviter l'inconfort, voire même toute blessure, d'un patient portant une orthèse dentaire conforme à l'invention, la surface externe du corps de cette dernière peut être lisse, de sorte qu'elle ne présente aucune aspérité.

Selon des exemples de réalisation préférés mais non limitatifs d'une orthèse dentaire conforme à l'invention, cette dernière peut consister en une coiffe orthodontique ou une bague molaire.

De manière avantageuse mais non limitative, pour répondre à un traitement orthodontique spécifique, plus particulièrement pour permettre l'emploi de plusieurs auxiliaires, une orthèse dentaire conforme à l'invention peut comporter une deuxième protubérance agencée pour constituer une deuxième attache par retrait de matière, ladite deuxième attache étant agencée pour être respectivement positionnée sur la face linguale de la couronne dentaire.

En variante ou en complément, la protubérance peut être agencée pour constituer une pluralité d'attaches distinctes par retrait de matière.

Pour répondre aux contraintes et normes imposées en orthodontie, mais également pour réduire, voire même éviter, toutes allergie et/ou sensibilisation, une orthèse dentaire conforme à l'invention peut être principalement constituée d'un matériau biocompatible.

Selon un deuxième objet, est divulgué un procédé de réalisation d'un objet virtuel correspondant à l'orthèse dentaire selon le premier objet de l'invention, Ce procédé ne fait toutefois pas partie de l'invention revendiquée.

Pour assurer la conception d'une orthèse dentaire conforme à l'invention de manière individualisée et parfaitement maîtrisée, le procédé comprend:
- une étape préalable d'acquisition d'une première représentation numérique d'une couronne-dentaire d'un patient en trois dimensions
- une étape pour définir le corps de l'orthèse dentaire à partir de la première représentation numérique tridimensionnelle de la couronne dentaire dudit patient et produire une deuxième représentation numérique tridimensionnelle du corps de l'orthèse dentaire ;
- une étape pour sélectionner et associer à la deuxième représentation numérique tridimensionnelle du corps de l'orthèse la lumière de l'attache par rapport à la surface externe du corps ;
- une étape pour créer la protubérance par projection non linéaire de la surface interne du corps, de sorte que ladite protubérance encapsule la lumière et constitue l'attache.

Préférentiellement mais non limitativement, lorsque la fabrication d'une orthèse dentaire conforme à l'invention est mise en oeuvre par des technologies d'impression tridimensionnelle, un procédé de réalisation d'un objet virtuel conforme à l'invention peut comporter une étape pour produire un script représentatif de l'objet virtuel interprétable ou exécutable par l'unité de traitement d'un dispositif d'élaboration de volumes par agglomération de matière, dont l'interprétation ou l'exécution provoque la réalisation de l'orthèse dentaire.

Selon un troisième objet, qui ne fait pas partie de l'invention, quelle que soit la variante de réalisation d'un procédé de réalisation d'un objet virtuel conforme à l'invention, et afin d'adapter un objet électronique communicant pour qu'il puisse mettre en oeuvre un tel procédé, est divulgué un produit programme d'ordinateur chargé dans un moyen de mémorisation d'un objet électronique comportant une ou plusieurs instructions interprétables ou exécutables par une unité de traitement de l'objet électronique. Lesdites instructions par l'unité de traitement sont telles que leur interprétation ou exécution par ladite unité de traitement provoque la mise en oeuvre d'un procédé de réalisation d'un objet virtuel conforme au deuxième objet de l'invention.

Selon un quatrième objet, qui ne fait pas partie de l'invention, est divulgué un procédé de fabrication d'une orthèse dentaire, ladite orthèse étant conforme au premier objet de l'invention.

Selon un premier mode de réalisation non limitatif d'un procédé de fabrication conforme à l'invention, ce dernier comprend :
- les étapes du procédé de réalisation d'un objet virtuel conforme au deuxième objet de l'invention
- une étape de fabrication soustractive de ladite orthèse dentaire partir de l'objet virtuel qui comporte une opération de coulage ou moulage par injection de l'orthèse dentaire 3 en une seule pièce suivie d'une opération d'usinage, pour retirer de la matière dans une protubérance et pour réaliser la lumière de l'attache.

En variante, pour améliorer la précision de la fabrication d'une orthèse dentaire conforme à l'invention, selon un deuxième mode de réalisation non limitatif d'un procédé de fabrication conforme à l'invention, ce dernier comprend :
- les étapes d'un procédé de réalisation d'un objet virtuel conforme au deuxième objet de l'invention;
- une étape de fabrication additive de ladite orthèse dentaire à partir du script, consistant en une étape d'impression tridimensionnelle.

Enfin, selon un cinquième objet, qui ne fait pas partie de l'invention, est divulgué un appareil orthodontique comprenant deux orthèses dentaires et un arc orthodontique, ledit arc orthodontique coopérant avec lesdites deux orthèses dentaires. Préférentiellement mais non limitativement, au moins une des deux orthèses dentaires est conforme au premier objet de l'invention.

D'autres caractéristiques et avantages apparaîtront plus clairement à la lecture de la description qui suit et à l'examen des figures qui l'accompagnent parmi lesquelles :
- les figures 1A et 1B, précédemment décrites, présentent deux modes de réalisation d'appareils orthodontiques connus et mis en place dans la bouche d'un utilisateur ou patient, respectivement dans le cas d'une technique vestibulaire et dans le cas d'une technique linguale ;
- la figure 2, précédemment décrite, illustre une vue schématisée d'un premier exemple d'une orthèse dentaire connue sous la forme d'un ensemble base/attache ;
- les figures 3A et 3B, précédemment décrites, présentent des vues schématisées d'un deuxième exemple d'une orthèse dentaire connue sous la forme d'une bague molaire ;
- les figures 4A, 4B, 4C et 4D présentent des vues schématiques respectives d'un mode de réalisation préféré mais non limitatif d'une orthèse dentaire conforme à l'invention ;
- la figure 5 décrit schématiquement un organigramme simplifié d'un procédé de fabrication d'une orthèse dentaire conforme à l'invention.

Les figures 4A à 4D présentent respectivement des vues schématiques respectives d'un mode de réalisation préféré mais non limitatif d'une orthèse dentaire conforme à l'invention sous la forme d'une coiffe orthodontique. En variante, ladite orthèse dentaire peut consister en une bague molaire. Toutefois, l'invention ne saurait être limitée à ces seuls exemples de réalisation. Dans son sens étymologique, une orthèse est un appareil destiné à redresser ce qui est dévié. Une orthèse compense généralement une fonction absente ou déficitaire, assiste une structure articulaire ou musculaire, stabilise un segment corporel pendant une phase de réadaptation ou de repos.

Au sens de l'invention et dans tout le document, on entend par « orthèse dentaire », tout dispositif, objet ou appareil destiné à corriger la posture d'une dent, plus particulièrement sa couronne dentaire, afin notamment d'optimiser l'équilibre postural entre les structures osseuses, l'occlusion, ainsi que le développement des bases osseuses dans un but fonctionnel et esthétique. Une telle orthèse dentaire est ainsi agencée pour transmettre un effort mécanique à une couronne dentaire et ainsi déplacer ladite couronne dentaire dans les trois directions déterminées de l'espace.

Une telle orthèse dentaire est avantageusement destinée à être employée par un sujet ou patient soumis à un traitement orthodontique, que ce dernier soit vestibulaire ou lingual, dans le but d'améliorer l'esthétique ou les fonctions de l'arcade dentaire dudit patient, un tel patient étant préférentiellement mais non limitativement un être humain. Ladite orthèse dentaire est avantageusement individualisée et adaptée au patient qui la porte, de ce fait, elle est à usage unique et temporaire, puisqu'elle sera mise en place le temps du traitement orthodontique. Une telle orthèse dentaire pallie les problèmes d'ajustement connus en lien avec les bagues industrielles connues et en conséquence améliore le confort du patient. A cet effet, la structure et l'agencement de ladite orthèse dentaire seront individualisés et adaptés en fonction dudit traitement orthodontique, plus particulièrement de son type et sa durée, et de la couronne dentaire sur laquelle elle sera mise en place.

Une orthèse dentaire 3 conforme à l'invention comporte un corps 33, ledit corps étant agencé pour recouvrir homothétiquement une partie d'une couronne dentaire. Ladite couronne est généralement définie par cinq faces, en l'espèce la face linguale, la face occlusale, la face distale, la face mésiale et la face vestibulaire. Ainsi, de par son agencement particulier, le corps 33 présente des formes et des dimensions proportionnelles à toute ou partie, plus particulièrement des faces, de la couronne dentaire et épouse avantageusement toutes ou parties des différentes faces de la couronne dentaire.

Pour ce faire, le corps 33 d'une orthèse dentaire conforme à l'invention présente une surface interne 33i (également qualifiée de « surface intrados »), avantageusement agencée pour être en contact et prendre appui de façon homothétique sur une partie d'une couronne dentaire. De manière avantageuse, pour assurer un meilleur ancrage d'une orthèse dentaire 3 conforme à l'invention et pour éviter l'emploi excessif de colle ou de ciment couramment utilisé pour le maintien pérenne de ladite orthèse et l'insertion d'auxiliaires ou arcs orthodontiques, la surface interne 33i dudit corps 33 est agencée pour recouvrir homothétiquement au moins une partie de trois faces de ladite couronne dentaire parmi la face linguale, la face occlusale, la face distale, la face mésiale et la face vestibulaire. En effet, un tel agencement homothétique de la surface interne 33i du corps 33 est particulièrement avantageux en matière d'hygiène notamment, puisqu'il minimise les risques d'infiltration de colle ou de ciment employés aujourd'hui avec les bagues actuelles pour la mise en place et le maintien desdites bagues, les quantités de colle ou de ciment employés étant beaucoup plus faibles. En outre, un tel agencement du corps 33 d'une orthèse conforme à l'invention améliore le confort du patient, puisque les traumatismes engendrés par l'insertion des bagues industrielles préformées dans la zone sous gingivale sont réduits, voire éliminés. Également, grâce à une forme anatomique homothétique, la dépose et le maintien de ladite orthèse sont grandement facilités. Préférentiellement, la surface interne 33i du corps 33 d'une orthèse dentaire conforme à l'invention est agencée pour recouvrir homothétiquement au moins une partie de trois faces de ladite couronne dentaire, l'une d'entre elles consistant en la face vestibulaire et les deux autres étant choisies parmi la face linguale, la face occlusale, la face distale et la face mésiale, ladite attache étant alors agencée pour être positionnée sur la face vestibulaire.

Préférentiellement mais non limitativement, conformément à un mode de réalisation d'une orthèse dentaire 3 décrite en lien avec la figure 4D, afin notamment d'optimiser encore plus le positionnement de l'orthèse dentaire et de réduire, voire supprimer, tout inconfort et tout risque lié à l'hygiène pour le patient portant ladite orthèse, la surface interne 33i dudit corps 33 peut être agencée pour recouvrir homothétiquement une partie de la face occlusale et une partie de la face linguale et une partie de la face vestibulaire de ladite couronne dentaire. En effet, l'accès aux faces mésiale et distale d'une couronne dentaire est généralement limité par l'espace entre deux couronnes dentaires, qui peut dans certains cas être quasi-inexistant. Par ailleurs, l'ancrage et la mise en place de l'orthèse dentaire conforme à l'invention sont grandement facilités, lorsque la surface interne 33i dudit corps 33 est agencée pour recouvrir homothétiquement une partie de la face occlusale.

Également, le corps 33 d'une orthèse dentaire 3 conforme à l'invention présente une surface externe 33e. Ladite surface externe 33e est avantageusement agencée de sorte à ne pas gêner le positionnement des dents antagonistes par rapport à la couronne dentaire munie de l'orthèse dentaire. L'épaisseur du corps 33 entre la surface interne 33i et la surface externe 33e est avantageusement déterminée pour répondre à un tel critère. De manière avantageuse mais non limitative, une telle épaisseur pourra être supérieure ou égale à 0,5 millimètre. A titre d'exemple non limitatif, conformément au mode de réalisation d'une orthèse dentaire 3 conforme à l'invention décrit notamment en lien avec les figures 4A à 4D, la surface externe 33e du corps 33 peut être une résultante de la projection de la surface interne 33i, le corps formant alors sensiblement une coque, pouvant être qualifiée d'enveloppe, de chappe ou de coiffe. Un tel agencement de la surface externe 33e au regard de la surface interne 33i du corps 33 est particulièrement avantageux, puisqu'il facilite la conception de l'orthèse dentaire de manière numérique. Préférentiellement mais non limitativement, la surface externe 33e du corps 33 peut être sensiblement lisse, de sorte qu'elle ne présente aucune aspérité et/ou rugosité. Au sein des orthèses dentaires conventionnelles connues, de telles aspérités imposent généralement des inégalités ou irrégularités de surface, donnant ainsi de la rudesse à la surface externe 33e et augmentant ainsi l'inconfort du patient. En outre, une surface externe 33e sensiblement lisse permet d'améliorer l'hygiène buccale, lesdites aspérités pouvant éventuellement retenir certaines impuretés ou bactéries.

A l'instar des orthèses dentaires connues et précédemment décrites, une orthèse dentaire 3 conforme à l'invention comporte une attache 321, 322, 323 présentant une lumière, respectivement 321g, 322g, 323g. Comme décrit précédemment, une telle attache, plus particulièrement sa lumière, est agencée pour accueillir un arc orthodontique 2 et permettre alors audit arc orthodontique 2 le transfert des efforts sur la couronne dentaire, afin d'assurer le déplacement adéquat de ladite couronne dentaire pendant le traitement orthodontique.

Comme précisé précédemment, il est nécessaire qu'une telle attache coopère durablement et précisément, notamment du point de vue de son orientation, sans degré de liberté avec la surface externe du corps de l'orthèse dentaire, afin de préserver les différentes informations liées aux ordres. Pour offrir une orthèse dentaire individualisée, conçue de manière numérique et adaptée à l'anatomie d'un patient, améliorant l'hygiène et le confort dudit patient, réduisant les risques d'une désolidarisation accidentelle de l'orthèse et de la couronne dentaire hôte et assurant un placement optimal des attaches de ladite orthèse par une orientation déterminée et précise desdites attaches et adaptée au traitement orthodontique souhaité, conformément notamment à un mode de réalisation d'une orthèse dentaire conforme à l'invention décrit en lien avec les figures 4A à 4D, l'invention prévoit que la surface externe 33e dudit corps 33 comporte une protubérance 341,342 régulière, c'est-à-dire qu'elle ne présente pas de discontinuité ou d'épaulement marqué. Au sens de l'invention et dans tout le document, une « protubérance » est entendue comme une forme proéminente et faisant saillie. Préférentiellement, mais non limitativement, une protubérance 341,342 peut être sensiblement convexe, c'est-à-dire qu'elle présente une courbure sphérique en relief. Afin d'assurer le confort du patient sans obérer son hygiène, à l'instar de la surface externe 33e du corps 33, une telle protubérance 341,342 peut être sensiblement lisse, de sorte qu'elle ne présente aucune aspérité et/ou rugosité. Selon l'invention, une telle protubérance 341,342 d'une orthèse dentaire 3 conforme à l'invention est agencée pour constituer ladite attache 321,322,323 par retrait de matière. Ladite protubérance est ainsi avantageusement agencée pour comporter et accueillir l'attache 321,322,323 et ainsi définir la lumière 321g, 322g, 323g de ladite attache 321,322,323. Nous détaillerons ultérieurement différents procédés de fabrication d'une orthèse dentaire conforme à l'invention, démontrant ainsi la constitution d'une telle attache par retrait de matière, un tel retrait de matière pouvant être réalisé virtuellement, c'est-à-dire numériquement, au moyen d'un procédé de caractérisation d'une orthèse dentaire conforme à l'invention que nous décrirons également plus tard, ou réellement c'est-dire durant le procédé de fabrication d'une orthèse conforme à l'invention. Pour ce faire, la protubérance présente, de par ses dimensions et sa forme, suffisamment de matière ou d'épaisseur pour constituer dans la masse l'attache 321,322,323, une telle attache présentant une lumière respectivement 321g,322g,323g, ladite lumière étant ainsi pratiquée au sein de la protubérance durant le procédé de fabrication de ladite orthèse dentaire ou virtuellement encapsulée par ladite protubérance ou durant l'étape de caractérisation de ladite orthèse dentaire. En conséquence, la forme et les dimensions de ladite protubérance 341,342 sont adaptées ou agencées pour créer la protubérance et pour supporter un ou plusieurs efforts mécaniques transmis par un arc orthodontique et/ou tout autre auxiliaire, permettant alors le déplacement d'une couronne dentaire dans le cadre d'un traitement orthodontique. A l'instar de la surface externe 33e, la protubérance 341,342, plus particulièrement sa forme et ses dimensions, sont également et avantageusement agencées de sorte à ne pas gêner le positionnement des dents antagonistes par rapport à la couronne dentaire munie de l'orthèse dentaire. Par ailleurs, en fonction du traitement orthodontique, que celui-ci soit lingual ou vestibulaire, la protubérance 341,342, et par voie de conséquence l'attache 321,322,323, d'une orthèse dentaire 3 conforme à l'invention sont agencées pour être préférentiellement positionnées la face vestibulaire, éventuellement sur la face linguale de la couronne dentaire.

La protubérance 341,342 d'une orthèse dentaire 3 conforme à l'invention constitue ainsi une attache 321, 322, 323 présentant une lumière, respectivement 321g, 322g, 323g, agencée pour accueillir un arc orthodontique 2 et permettre alors audit arc orthodontique 2 le transfert des efforts sur la couronne dentaire, afin d'assurer le déplacement adéquat de ladite couronne dentaire pendant le traitement orthodontique. La lumière 321g, 322g, 323g présente au sein de la protubérance 341,342 consiste en un orifice, évidement ou une cavité centrale débouchant aménagé dans l'attache afin d'y permettre le passage, voire le maintien d'un arc orthodontique 2 ou de tout autre auxiliaire orthodontique. Ladite lumière 321g, 322g, 323g est avantageusement pratiquée, lors d'un procédé de fabrication d'une orthèse dentaire conforme à l'invention, par un retrait de matière virtuel ou réel au sein de la protubérance 341,342. Ladite protubérance 341,342 peut présenter alors une paroi interne cylindrique ou une paroi comportant des sections planes sensiblement parallèles à un axe longitudinal de la lumière d'une attache, comme cela est le cas pour une lumière ou une paroi interne à section rectangulaire par exemple. A titre d'exemples non limitatifs, conformément à un mode de réalisation non limitatif d'une orthèse dentaire 3 conforme à l'invention décrit en lien avec les figures 4A à 4D, la lumière 321g, et par voie de conséquence la paroi interne, de l'attache 321 peuvent avantageusement présenter une section circulaire. En variante ou en complément, toujours selon le même mode de réalisation, la lumière 322g, et par voie de conséquence la paroi interne, de l'attache 322 peuvent avantageusement présenter une section sensiblement rectangulaire et la lumière 323g, et par voie de conséquence la paroi interne, de l'attache 323 peuvent avantageusement présenter une section sensiblement oblongue. L'invention ne saurait toutefois être limitée à ces seuls exemples de lumières et/ou d'attaches. Le choix d'une lumière spécifique et/ou d'une attache particulière au regard d'une autre lumière et/ou d'une autre attache dépendra principalement du traitement orthodontique prescrit.

Lorsque la lumière 321g, 322g, 323g, et par voie de conséquence la paroi interne de l'attache 321g, 322g, 323g, d'une orthèse dentaire 3 conforme à l'invention, présentent une section sensiblement carrée ou rectangulaire, l'invention prévoit que les arêtes de la paroi interne de l'attache 321g, 322g, 323g décrivent respectivement des axes de révolution de cylindres ouverts, en l'espèce quatre, débouchant dans ladite lumière 321g, 322g, 323g. En d'autres termes, la lumière 321g, 322g, 323g peut décrire une section sensiblement carrée ou rectangulaire dont les angles s'apparentent à des disques ouverts, en l'espèce quatre, débouchant dans la lumière 321g, 322g, 323g. La présence de tels cylindres ouverts s'avère particulièrement avantageuse, de sorte à éviter lors de la fabrication, notamment additive, ou durant l'utilisation d'une orthèse dentaire 3 conforme à l'invention, des dépôts de matières à proximité desdites arêtes ou angles.

Lorsqu'une orthèse dentaire 3 conforme à l'invention comporte une attache 322 dont la section de lumière 322g, donc de la paroi interne de l'attache 322, est sensiblement rectangulaire, la section de ladite paroi interne peut être sensiblement rectiligne ou constante. En variante ou en complément, lorsque la longueur de l'attache est supérieure aux us et coutumes, l'invention prévoit que la section de ladite paroi interne puisse être variable, plus particulièrement évidé au centre de l'attache, c'est-à-dire comportant un ou plusieurs épaulements ou gorges annulaires, les extrémités latérales de la paroi interne pouvant présenter des sections plus restreintes et assurant la contrainte et de l'orientation de l'arc orthodontique au sein de ladite orthèse dentaire.

Comme d'ores et déjà mentionné, l'un des buts de l'invention est de garantir une coopération sans degré de liberté pérenne et précise entre l'attache et la surface externe du corps de l'orthèse dentaire, notamment du point de vue de son orientation, afin de préserver les différentes informations liées aux ordres. L'inconvénient principal des orthèses dentaires actuelles réside en ce qu'une telle coopération est généralement réalisée au moyen d'une soudure, qui peut, au fil du temps se fissurer, voire même se rompre. Pour remédier à un tel inconvénient, ledit corps 33 et ladite protubérance 341,342 sont faits d'une seule pièce, c'est-à-dire que la fabrication d'une telle orthèse, que nous décrirons plus tard dans le document, est réalisée d'un seul tenant ou encore dite monobloc. Lors de la conception ou de la caractérisation d'une orthèse dentaire 3 conforme à l'invention, une attache 321,322,323 est orientée de façon individualisée, en fonction des objectifs de traitements orthodontiques dans les premier, deuxième et troisième ordres. Lorsque ladite attache d'une orthèse dentaire 3 conforme à l'invention est agencée pour être positionnée sur la face vestibulaire d'une couronne dentaire, l'orientation d'une attache peut être en accord avec celles des attaches des autres couronnes dentaires pour que les points de contact soient au même niveau. L'invention ne saurait toutefois être limitée à une orientation et/ou à une position prédéterminées d'une attache au sein de l'orthèse dentaire 3. L'orientation et/ou la position d'une attache pourra dépendre et/ou répondre à des phases thérapeutiques ou à des choix stratégiques relatifs au traitement orthodontique, selon notamment la sévérité de la malocclusion.

Selon le traitement orthodontique choisi et/ou la couronne dentaire sur laquelle est prévue la mise en place d'une orthèse conforme à l'invention, telle que par exemple une molaire, il peut être nécessaire dans certains cas d'employer différents arcs ou auxiliaires orthodontiques pour transmettre différents efforts selon différents ordres et ainsi assurer un déplacement optimal de la couronne dentaire.

Pour ce faire, l'invention prévoit qu'une orthèse dentaire 3 conforme à l'invention puisse, en complément, comporter non pas seulement une protubérance, telle qu'évoquée précédemment, mais une pluralité de protubérances similaires à cette dernière de par leurs structures et fonctions. Ainsi, conformément au mode de réalisation d'une orthèse dentaire conforme à l'invention décrit en lien avec les figures 4A à 4D, une telle orthèse dentaire 3 comporte des première et deuxième protubérances 341,342 agencées pour constituer des première et deuxième attaches 321,322,323 par retrait de matière. Préférentiellement mais non limitativement, conformément à un mode de réalisation non limitatif d'une orthèse dentaire conforme à l'invention décrit en lien avec les figures 4A à 4D, les première et deuxième attaches 321,322,323, et par voie de conséquence les première et deuxième protubérances 341,342, peuvent être agencées pour être respectivement positionnées sur les faces linguale et/ou vestibulaire de la couronne dentaire.

En variante ou en complément, lorsque différents arcs ou auxiliaires sont nécessaires pour la mise en place d'un traitement orthodontique particulier, conformément à un mode de réalisation non limitatif d'une orthèse dentaire 3 conforme à l'invention décrit en lien avec les figures 4A à 4D, la protubérance ou les protubérances 341 peuvent être agencées pour constituer chacune une pluralité d'attaches 321,322 distinctes par retrait de matière, un tel retrait de matière étant pratiqué, comme précisé précédemment, virtuellement ou réellement lors d'un procédé de fabrication d'une orthèse dentaire conforme à l'invention.

Préférentiellement mais non limitativement, afin de répondre notamment aux normes en matière d'hygiène dentaire et répondre aux prescriptions en matière d'autorisation de mise sur le marché, une orthèse dentaire conforme à l'invention peut être principalement constituée d'un ou plusieurs matériaux biocompatibles. De tels matériaux biocompatibles permettent notamment de réduire, voire prévenir, tout risque d'allergies, de réactions d'hypersensibilité et/ou de toxicité. A titre d'exemples non limitatifs, le ou les matériaux biocompatibles peuvent être choisis parmi un acier inoxydable, un alliage à base de cobalt, tel que chrome-cobalt ou encore « stellite », le titane ou un alliage de titane, le dioxyde ou l'oxyde de zirconium, également connu couramment sous la dénomination « zircone », ou encore le polyétheréthercétone, également connu sous l'abréviation « PEEK ». L'invention ne saurait toutefois être limitée à cette seule liste non exhaustive de matériaux. Tout autre matériau capable d'assurer une fonction identique ou similaire pourrait en lieu et place être employé. En variante ou en complément, le ou les matériaux composant l'orthèse dentaire pourront être choisis en fonction de leur résistance à la corrosion et/ou de leur dégradation mécanique ou chimique.

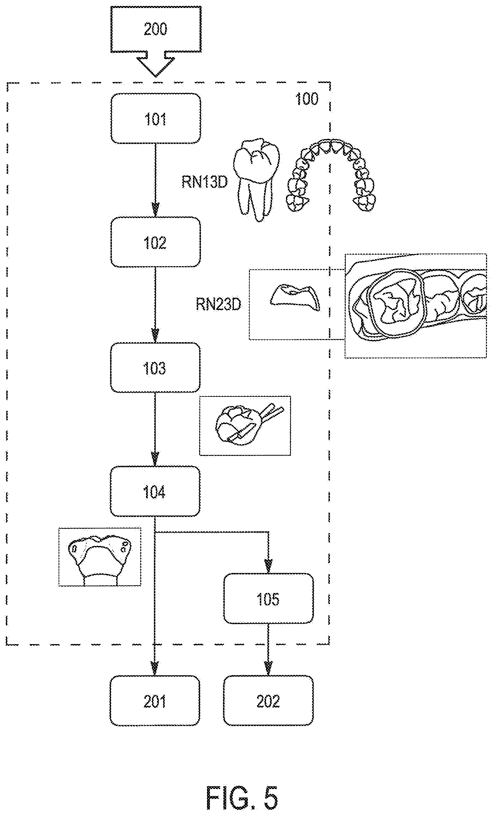

Comme d'ores et déjà mentionné, sont aussi divulgués en outre des procédés de caractérisation et de fabrication d'une orthèse dentaire conforme à l'invention. La figure 5 décrit schématiquement un organigramme simplifié d'un procédé de fabrication d'une orthèse dentaire conforme à l'invention.

Un tel procédé de fabrication 200 d'une orthèse dentaire conforme à l'invention comprend tout d'abord un procédé de caractérisation 100 d'une orthèse dentaire 3, ladite orthèse dentaire 3 étant également conforme à l'invention, ledit procédé 100 agencé pour permettre la conception individualisée, c'est-à-dire sur mesure de manière anatomique, de ladite orthèse dentaire 3 à partir d'une image ou représentation numérique d'une couronne dentaire d'intérêt d'un patient.

Ledit procédé de caractérisation 100 d'une orthèse dentaire 3 est avantageusement mis en oeuvre par un objet électronique (non représenté sur les figures à des fins de simplification), ledit objet étant avantageusement communicant. A titre d'exemples d'application préférés mais non limitatifs, un tel objet électronique peut consister en un téléphone intelligent (également connu sous la dénomination anglo-saxonne « *Smartphone* »), une tablette informatique et/ou un ordinateur personnel. Plus précisément, l'objet électronique comporte une unité de traitement, consistant en un ou plusieurs microcontrôleurs ou microprocesseurs, chargés de mettre en oeuvre ledit procédé de caractérisation d'une orthèse dentaire ou tout autre traitement sur des données. En variante, l'invention prévoit que ledit procédé de caractérisation d'une orthèse dentaire puisse être mis en oeuvre par l'unité de traitement d'un serveur informatique distant accessible depuis un poste client, par exemple selon la technologique SAAS (acronyme de la terminologie anglo-saxonne « *Software As A Service* »). Au sens de l'invention et dans tout le document, on entend par « serveur », un serveur informatique sous la forme d'un dispositif matériel et logiciel agencé pour délivrer des services de stockage ou des services calculatoires pour un ou plusieurs clients. Ces derniers sont généralement des ordinateurs ou objets électroniques nomades, tel qu'un téléphone portable par exemple, coopérant avec ledit serveur via un réseau de communication filaire ou sans fil, lorsque les moyens de communication émettent une communication sans fil, en mettant en oeuvre des protocoles de communication Internet, Intranet, WiFi, etc. L'objet électronique comporte en outre une mémoire de programmes, ladite mémoire coopérant avantageusement avec l'unité de traitement au moyen de bus de communication internes ou par couplage, agencée pour comporter, sous la forme d'un produit programme d'ordinateur préalablement chargé au sein de ladite mémoire, un procédé de caractérisation d'une orthèse dentaire conforme à l'invention. Lesdites données peuvent avantageusement être, pour toutes ou parties, enregistrées sur une ou plusieurs mémoires de données, généralement électriquement effaçables et inscriptibles. La mémoire de données peut avantageusement coopérer avec l'unité de traitement au moyen de bus de communication internes et/ou ne former qu'une seule et même entité avec la mémoire de programmes préalablement mentionnée.

Par ailleurs, l'objet électronique comprend des moyens d'entrée et/ou de sortie coopérant avantageusement avec l'unité de traitement au moyen de bus de communication internes. De tels moyens d'entrée et/ou de sortie permettent in fine de délivrer et/ou de restituer à un praticien ou plus généralement à un utilisateur, un rendu ou une représentation graphique d'une orthèse dentaire conforme à l'invention notamment, ou encore de diverses représentations graphiques pendant la phase de conception de ladite orthèse dentaire, telle que le corps, une protubérance et/ou une ou plusieurs attaches compris au sein de ladite orthèse dentaire. De telles représentations sont préférentiellement mais non limitativement restituées en trois dimensions. Une telle représentation graphique peut, avantageusement et préalablement à son affichage, être paramétrée, afin que soient automatiquement ou manuellement sélectionnées, par exemple une palette de couleurs, la taille et/ou la forme d'une telle représentation. L'invention ne saurait toutefois être limitée à ces seuls paramétrages. Aussi, à titre d'exemples non limitatifs, de tels moyens d'entrée et/ou de sortie peuvent avantageusement consister en une interface homme-machine ou interface graphique, un écran, éventuellement tactile, ou tout autre moyen équivalent adapté pour afficher ladite représentation graphique.

De plus, afin de réceptionner des données du monde extérieur, un objet électronique mettant en oeuvre un procédé de caractérisation selon l'invention comporte des moyens de communication avec le monde extérieur, assurant une communication, éventuellement de proximité, avec tout objet ou dispositif proche, c'est-à-dire à portée de communication radio par exemple, lesdits moyens de communication coopérant également avec l'unité de traitement au moyen de bus de communication internes. Lesdits moyens de communication peuvent ainsi assurer une communication, éventuellement filaire ou sans fil, par exemple lorsque les moyens de communication émettent une communication sans fil, en mettant en œuvre des protocoles de communication WiFi ou Bluetooth, à destination de tout dispositif distant, comme par exemple, un dispositif adapté ou agencé pour fabriquer une orthèse dentaire, tel que par exemple un dispositif d'élaboration de volumes par agglomération de matière, ou encore un serveur de séquences de représentations numériques tridimensionnelles d'une ou plusieurs couronnes dentaires d'un patient, constituant alors un dossier patient, à condition que ce dernier soit à portée de communication. Par l'intermédiaire desdits moyens de communication, l'objet électronique, ou plus précisément son unité de traitement, peut émettre et/ou recevoir des messages ou signaux, ci-après dénommés messages par mesure de simplification, encodant par exemple un script, à destination d'un dispositif d'élaboration de volumes par agglomération de matière ou encore une première représentation numérique tridimensionnelle RN13D d'une couronne dentaire en provenance d'un serveur distant.

En outre, pour que l'objet électronique puisse fonctionner en totale autonomie, ce dernier peut comporter avantageusement une source d'énergie électrique propre, sous la forme d'un ou plusieurs accumulateurs préalablement chargés et aptes à délivrer l'énergie électrique suffisante pour permettre le fonctionnement de l'objet électronique.

Conformément au mode de réalisation décrit en lien avec la figure 5, un tel procédé de caractérisation 100 d'une orthèse dentaire 3 conforme à l'invention comprend tout d'abord une étape 102 pour définir ou déterminer le corps 33 de l'orthèse dentaire 3 à partir d'une première représentation numérique tridimensionnelle RN13D d'une couronne dentaire. Une telle première représentation numérique tridimensionnelle RN13D d'une couronne dentaire peut être directement téléchargée depuis un serveur, avantageusement agencé pour stocker ladite première représentation numérique tridimensionnelle RN13D. En variante ou en complément, un procédé 100 de caractérisation conforme à l'invention peut comprendre une étape 101 préalable d'acquisition de la première représentation numérique tridimensionnelle RN13D d'une couronne dentaire en trois dimensions. A titre d'exemple non limitatif, ladite première représentation numérique tridimensionnelle RN13D d'une couronne dentaire peut être produite à partir d'un scanner intra-oral. Pour ce faire, une représentation numérique tridimensionnelle de la bouche d'un patient peut être acquise directement au moyen dudit scanner intra-oral placé dans la bouche du patient. Cette étape est principalement effectuée par un praticien au sein du cabinet dentaire. La ou les représentations numériques tridimensionnelles obtenues peuvent ensuite être stockées au sein d'un serveur tel que précédemment mentionné, et/ou post-traitées. En variante ou en complément, selon un autre exemple de réalisation, ladite première représentation numérique tridimensionnelle RN13D peut être acquise indirectement par numérisation en trois dimensions avec un scanner portatif en trois dimensions. Pour ce faire, une empreinte dentaire à partir de matériaux, tels que le silicone, le plâtre ou un alginate, est effectuée pour réaliser un moulage négatif de l'arcade dentaire du patient, permettant de "mouler" la bouche du patient. L'empreinte dentaire peut alors être numérisée directement à l'aide dudit scanner portatif en trois dimensions afin de produire une représentation numérique tridimensionnelle du moule et finalement une première représentation numérique tridimensionnelle RN13D d'une couronne dentaire. A titre d'exemple, une telle représentation numérique, objet virtuel ou avatar numérique peut consister en un tableau de coordonnées géométriques de points ou de lignes caractéristiques permettant d'appréhender numériquement le volume ou les contours extérieurs d'une couronne dentaire.

Comme d'ores et déjà mentionné, l'étape 102 d'un procédé de caractérisation 100 d'une orthèse dentaire 3 conforme à l'invention consiste alors à définir ou déterminer le corps 33 de l'orthèse dentaire 3 à partir de ladite première représentation numérique tridimensionnelle RN13D d'une couronne dentaire. De manière avantageuse, l'étape 102 d'un procédé 100 de caractérisation d'une orthèse dentaire conforme à l'invention consiste à produire une deuxième représentation numérique tridimensionnelle RN23D du corps 33 de l'orthèse dentaire 3, de sorte que la surface interne, c'est-à-dire la surface destinée à être en contact avec la couronne dentaire, constitue une projection homothétique totale ou partielle de la surface externe de la couronne dentaire. La surface externe du corps 33 peut quant à elle être obtenue par projection homothétique de la surface interne, de sorte que le corps 33 présente une épaisseur minimale prédéterminée, une telle épaisseur pouvant dépendre éventuellement du matériau qui constituera ledit corps.

Comme évoqué précédemment, une orthèse dentaire 3 conforme à l'invention peut consister en une coiffe orthodontique ou une bague molaire. Le choix d'une coiffe orthodontique ou d'une bague molaire, l'une par rapport à l'autre, dépend principalement de la couronne dentaire d'intérêt ou plus généralement du patient, des préférences du praticien et/ou du traitement orthodontique mis en place. Ainsi, selon le choix du praticien, c'est-à-dire selon que l'orthèse dentaire 3 consiste en une bague molaire ou une coiffe orthodontique, seulement certaines données géométriques de la première représentation numérique tridimensionnelle RN13D sont exploitées. En effet, le corps d'une orthèse dentaire conforme à l'invention est agencé, plus particulièrement dimensionné, de sorte que le recouvrement de la couronne dentaire sur laquelle l'orthèse dentaire est mise en place, est limité au juste nécessaire, afin de procurer plus de confort au patient. Ainsi, selon un premier exemple de réalisation, lorsque l'orthèse dentaire consiste en une bague molaire, le corps de la bague molaire consistant en un anneau, l'étape 102 consiste à dimensionner ledit corps de sorte qu'il ne recouvre pas la face occlusale et que la hauteur de l'anneau dudit corps soit proche du contour gingival. L'étape 102 peut ainsi comporter une sous-étape de détermination du contour gingival. En variante, lorsque l'orthèse dentaire 3 consiste en une coiffe orthodontique, pour limiter le recouvrement de la couronne dentaire, il est possible, voire même dans certains cas nécessaire, de limiter le recouvrement du corps de l'orthèse dentaire à la seule dépouille de la couronne dentaire. A cet effet, l'étape 102 peut ainsi comporter une sous-étape de détermination du plus grand contour de la paroi externe du corps, afin de minimiser le volume du corps englobant la dépouille dentaire. Ainsi, par l'utilisation d'une orthèse dentaire sous la forme d'une coiffe orthodontique, la contre-dépouille de la couronne dentaire ne sera pas recouverte, réduisant ainsi l'inconfort et le risque de blessure du patient, prévenant ainsi l'utilisation inconfortable de séparateurs dentaires généralement employés lors de l'installation de bagues et limitant par voie de conséquence le nombre de rendez-vous chez le praticien. De la même manière, une telle étape 102 peut consister à minimiser l'épaisseur occlusale de l'orthèse dentaire. Pour cela, l'étape 102 peut ainsi comporter une sous-étape destinée à retirer toute matière préjudiciable à l'occlusion, une telle matière retirée ne présentant aucun avantage pour l'ancrage de l'orthèse dentaire. A titre d'exemples non limitatifs, une telle sous-étape peut consister à définir des valeurs respectives moyenne, maximale et minimale des distances entre la surface interne et la surface externe dans la zone de la face occlusale de la couronne dentaire.

Un tel traitement d'une étape 102 peut être automatisé à partir de paramètres prédéterminés d'un programme ou sous-programme mis en oeuvre par l'objet électronique mettant en œuvre le procédé de caractérisation 100. Une telle action peut en outre être semi-automatique et requérir une intervention humaine via une interface homme/machine coopérant avec ou compris au sein dudit objet électronique, une telle interface homme/machine pouvant par exemple consister en un écran tactile, un clavier, un dispositif de pointage pour faciliter la mise en oeuvre de ladite étape 102.

Éventuellement, en variante ou en complément, l'objet électronique mettant en en oeuvre le procédé 100 comportant des moyens de sortie, tels qu'à titre d'exemple non limitatif une interface homme-machine, telle qu'un écran ou tout autre moyen équivalent, à un utilisateur dudit objet et/ou dispositif, lesdits moyens de sortie coopérant avec l'unité' de traitement dudit objet électronique, l'invention prévoit qu'un procédé de caractérisation 100 conforme à l'invention puisse en outre comporter une étape subséquente pour déclencher la restitution, c'est-à-dire l'affichage, de la deuxième représentation numérique tridimensionnelle RN23D du corps 33 de l'orthèse 3. L'affichage d'une telle deuxième représentation numérique tridimensionnelle RN23D peut avantageusement s'effectuer en deux ou trois dimensions et consiste principalement en l'affichage d'un objet virtuel ou avatar. La représentation graphique d'une telle deuxième représentation numérique tridimensionnelle RN23D dépend généralement d'un grand nombre de facteurs, notamment et à titre d'exemples non limitatifs, des préférences de l'utilisateur ou du praticien, d'éléments paramétrables sur les moyens de sortie, traduisant par exemple un choix d'orientation ou de texture d'une telle représentation du corps de l'orthèse, etc. Ainsi, préalablement à l'étape d'affichage d'une telle deuxième représentation numérique tridimensionnelle RN23D, un procédé 100 conforme à l'invention peut éventuellement comprendre une étape de configuration des paramètres respectifs desdits moyens de sortie, notamment et éventuellement de la représentation graphique d'une telle deuxième représentation numérique, notamment mais non limitativement la forme, la texture ou encore une palette de couleurs utilisées. La deuxième représentation numérique tridimensionnelle RN23D peut en outre comporter des données géométriques caractérisant les surfaces interne et/ou externe du corps de l'orthèse dentaire. En variante ou en complément, l'invention prévoit que de telles données géométriques caractérisant les surfaces interne et/ou externe du corps de l'orthèse dentaire puissent être déduites de caractéristiques volumiques de l'avatar ou objet virtuel.

A l'issue de la mise en oeuvre de l'étape 102, le procédé 100 a déterminé les données caractéristiques permettant de caractériser le corps 33 d'une orthèse dentaire, tout en cherchant à ne conserver que le strict nécessaire en terme de parties des faces de la couronne dentaire recouverte par le corps, afin notamment de ne pas gêner l'occlusion tout en offrant une accroche optimale de l'orthèse sur la couronne dentaire, et en disposant, à la fin de cette étape 102, d'une base suffisante pour constituer une ou plusieurs attaches.

La détermination d'une telle attache est réalisée par la mise en oeuvre d'une étape 103. Cette dernière consiste à sélectionner automatiquement, lorsque ceci est possible, ou de manière semi-automatique ou encore assistée via une interaction d'un utilisateur humain, le type et/ou la forme de l'attache, plus particulièrement la lumière de ladite attache. Ce dernier peut en effet à l'aide d'une interface homme/machine d'entrée adaptée, telle que, comme mentionné précédemment, une interface homme/machine coopérant avec ou compris au sein dudit objet électronique, sélectionner et/ou positionner, non pas une attache à l'instar des solutions connues, mais la lumière de ladite attache, le corps de l'attache étant déterminé ultérieurement à l'étape 104. Une lumière, déterminée par une section transversale, une longueur, une orientation relative au corps de l'orthèse et/ou un axe longitudinal, peut être associée à proximité de la surface externe de l'avatar du corps de l'orthèse. Une telle étape 103 peut être éventuellement itérée si l'orthèse dentaire est agencée pour comporter une pluralité d'attaches. L'étape 103 consiste ainsi à produire des données géométriques relatives à une ou plusieurs lumières respectives d'attaches en complément des données géométriques caractérisant l'avatar du corps de l'orthèse dentaire, un tel corps étant agencé homothétiquement à la couronne dentaire, lesdites données géométriques ayant été préalablement déterminées à l'étape 102.

Pour constituer un avatar complet d'une orthèse 3 conforme à l'invention, une telle orthèse étant agencée en une seule pièce et comportant une ou plusieurs attaches, un procédé de caractérisation 100 conforme à l'invention comporte une étape 104 pour agencer une protubérance linguale ou vestibulaire sous la forme d'une excroissance de la surface externe de l'avatar du corps produit en 102, de sorte que, par déformation ou projection de ladite surface, ladite déformation induisant généralement une excroissance de forme convexe, ladite surface externe recouvre préférentiellement la ou les lumières, sélectionnées à l'étape 103, sur l'essentiel ou l'intégralité de la longueur de chacune de celles-ci, d'une épaisseur, c'est-à-dire d'une distance séparant la paroi interne de la lumière de la paroi extérieure du corps supérieure ou égale à une valeur prédéterminée. De manière avantageuse, pour conférer un confort optimal au patient, une telle étape 104 cherchera à minimiser toute rupture ou discontinuité brutale, lors de la constitution d'une protubérance matérialisant un corps d'attache unifié avec celui du corps déterminé à l'étape 102, à déterminer des données caractéristiques et géométriques de ladite protubérance, de sorte que toute arête ou aspérité soit absente ou minimisée. A l'issue de la mise en oeuvre de l'étape 104, un procédé de caractérisation 100 conforme à l'invention a déterminé l'avatar d'une orthèse monobloc comportant éventuellement une ou plusieurs attaches. L'étape 104 permet ainsi de disposer d'une troisième représentation numérique tridimensionnelle de l'orthèse dentaire 3 finale. Nous pouvons remarquer que la constitution d'une protubérance encapsulant une lumière peut également être réalisée au moyen d'une « déformation ou projection » de l'avatar du corps produit à l'étape 102, à l'instar de la déformation ou projection décrite en lien avec l'étape 104, préalablement à la mise en oeuvre de l'étape 103 visant à positionner une lumière Cette variante de réalisation peut être utile et employable, notamment dans le cas où la forme de ladite protubérance peut être globalement prédéterminée et standard, indépendamment de l'attache à intégrer. Selon un tel agencement, une étape correctrice de la géométrie de la protubérance pourra être mise en oeuvre si la forme ou le volume de celle-ci s'avérait insuffisant ou inadapté à ou aux lumières sélectionnées et positionnées à l'étape 103.

Éventuellement, en variante ou en complément, un objet électronique mettant en oeuvre le procédé 100 comportant des moyens de sortie, tels qu'à titre d'exemple non limitatif une interface homme-machine, telle qu'un écran ou tout autre moyen équivalent, à un utilisateur dudit objet et/ou dispositif, lesdits moyens de sortie coopérant avec l'unité de traitement dudit objet électronique, l'invention prévoit qu'un procédé de caractérisation 100 conforme à l'invention puisse en outre comporter une étape subséquente pour déclencher la restitution, c'est-à-dire l'affichage, de la troisième représentation numérique tridimensionnelle RN33D du corps de l'orthèse 3. A l'instar de l'affichage d'une telle deuxième représentation numérique tridimensionnelle RN23D, l'affichage d'une telle troisième représentation numérique tridimensionnelle RN33D peut avantageusement s'effectuer en deux ou trois dimensions et consiste principalement en l'affichage d'un objet virtuel dont les paramètres peuvent être définis ou prédéterminés.

A l'issue de l'étape 104, un procédé de caractérisation 100 conforme à l'invention peut comporter une étape 105 pour traduire la troisième représentation numérique tridimensionnelle RN33D ou l'avatar de l'orthèse 3 sous la forme d'un script ou d'un ensemble d'instructions, visant à piloter un dispositif de production de l'orthèse dentaire par ajout de matière, communément qualifié de dispositif d'élaboration de volumes par agglomération de matière ou d'imprimante en trois dimensions (3D).

Ainsi, un procédé 100 pour déterminer les caractéristiques géométriques d'une orthèse dentaire d'une seule pièce comportant une attache, voire pour produire un script pour mettre en oeuvre des technologies de fabrication additive, a été décrit en totalité. Quelle que soit la configuration d'un procédé 100 de caractérisation d'une orthèse dentaire 3 conforme à l'invention, ledit procédé 100 étant conforme à l'invention, un mode d'adaptation préférée d'un objet électronique communicant, tel que celui décrit précédemment, consiste à enregistrer ou télécharger en mémoire de programmes, un produit programme d'ordinateur P comportant une pluralité d'instructions de programme qui, lorsqu'elles sont exécutées ou interprétées par l'unité de traitement dudit objet électronique provoquent la mise en oeuvre dudit procédé 100 de caractérisation d'une orthèse dentaire conforme à l'invention.

Un procédé de fabrication 200 d'une orthèse dentaire 3 est divulgué, ce procédé ne faisant pas partie de l'invention, ladite orthèse 3 étant conforme à l'invention. Un tel procédé de fabrication 200 consiste en un procédé de façonnage de l'orthèse dentaire, un tel façonnage étant réalisé à partir de l'avatar, également qualifié de troisième représentation numérique, d'une orthèse dentaire 3 monobloc préalablement conçu au moyen d'un procédé de caractérisation 100 d'une orthèse dentaire conforme à l'invention. Pour ce faire, ledit procédé de fabrication 200 peut comporter toutes ou partie des étapes 101,102,103,104,105 dudit procédé de caractérisation 100 d'une orthèse dentaire.

Une fois l'avatar de l'orthèse monobloc obtenu, s'en suit une étape de façonnage de ladite orthèse dentaire, consistant à créer physiquement ladite orthèse. Préférentiellement mais non limitativement, afin d'offrir de grandes possibilités de personnalisation et de proposer des orthèses dentaires adaptées à chaque patient, une telle étape de façonnage consiste en une étape de fabrication additive de ladite orthèse dentaire, consistant en une étape d'impression tridimensionnelle. Une telle étape de fabrication additive 202, avantageusement mise en oeuvre par l'unité de traitement d'un dispositif de production de l'orthèse dentaire par ajout de matière, communément qualifié de dispositif d'élaboration de volumes par agglomération de matière ou d'imprimante en trois dimensions (3D), peut exploiter différents types de technologies de fabrication additive, telles qu'à titre d'exemples non limitatifs, les technologies SLM pour « Sélective Laser Melting » ou LBM pour « Laser Beam Melting ». Préférentiellement, ladite étape de fabrication additive 202 pourra s'appuyer sur une technologie MBJ pour « Métal Binder Jetting ». Toutefois, l'invention ne saurait être limitée à ces seuls exemples de technologies et pourra employer toute technologie de fabrication additive jugée adaptée à une orthèse dentaire conforme à ladite invention.

En variante, l'étape de façonnage peut consister en une étape de fabrication soustractive 201 de ladite orthèse dentaire pour réaliser un retrait de matière et constituer l'attache, consistant en une étape de perçage, d'usinage ou de fraisage après que le corps et une ou plusieurs protubérances ont été réalisés par coulage de matière au sein d'un moule. Pour ce faire, à partir de l'avatar, également qualifié de troisième représentation numérique, un moule peut être préalablement constitué. Une étape de fabrication soustractive 201 de ladite orthèse dentaire peut alors comporter une opération de coulage ou moulage par injection de l'orthèse dentaire 3 en une seule pièce suivie d'une opération d'usinage, via par exemple une fraise pilotée numériquement, pour retirer de la matière dans une protubérance 341,342 et pour réaliser une lumière éventuelle d'une attache.

Quel que soit le mode de réalisation de l'étape de façonnage, l'orthèse dentaire obtenue consiste toujours en une seule pièce dont le corps a été réalisé d'un seul tenant et pour lequel une ou plusieurs attaches sont réalisées par retrait de matière, soit par conception numérique dans le cadre de la mise en œuvre d'une étape de fabrication additive, le retrait étant réalisé virtuellement avant le façonnage de l'orthèse dentaire, soit physiquement dans le cadre de la mise en oeuvre d'une étape de fabrication soustractive, le retrait étant réalisé par fraisage par exemple.

Un tel procédé de fabrication 200 peut être mis en oeuvre par le même objet électronique mettant en oeuvre le procédé de caractérisation 100 ou par un dispositif distinct exploitant la troisième représentation numérique tridimensionnelle de l'orthèse obtenue à l'étape 104 ou le script obtenu à l'étape 105. Dans ce cas, un dispositif mettant en oeuvre les étapes de façonnage peut être adapté par le chargement d'un programme d'ordinateur dans une mémoire de programmes dudit objet dont les instructions provoquent la mise en oeuvre du procédé de fabrication 200, lors de leur interprétation par l'unité de traitement dudit dispositif.

Enfin, l'un des buts de l'invention consiste en l'emploi d'une ou plusieurs orthèses dentaires conforme à l'invention précédemment décrites et agencées dans le cadre d'un traitement orthodontique spécifique et individualisé. Pour ce faire, l'invention concerne en outre un appareil orthodontique 1. Tel que décrit précédemment, un tel appareil orthodontique comprend au moins deux orthèses dentaires 3 et un arc orthodontique 2 coopérant avec lesdites deux orthèses dentaires 3. De manière avantageuse mais non limitative, au moins une des deux orthèses 2 est conforme à l'invention.

## Revendications

1. Orthèse dentaire (3), comportant un corps (33) présentant une surface interne (33i) et une surface externe (33e), ledit corps étant agencé pour recouvrir homothétiquement une partie d'une couronne dentaire d'un patient, une première et une deuxième attaches (321,322,323) présentant chacune une lumière (321g,322g,323g) et coopérant sans degré de liberté avec la surface externe (33e) dudit corps (33), ladite orthèse dentaire (3) étant **caractérisée en ce que** :
- la surface interne (33i) dudit corps (33) est agencée pour recouvrir homothétiquement au moins une partie de trois faces de ladite couronne dentaire dudit patient, une première face consistant en la face vestibulaire, une deuxième face consistant en la face linguale et une troisième face choisie parmi la face occlusale, la face distale et la face mésiale, ladite première attache étant agencée pour être positionnée sur la face vestibulaire de la couronne dentaire et ladite deuxième attache étant agencée pour être positionnée sur la face linguale de la couronne dentaire
- la surface externe (33e) dudit corps (33) comporte :
∘ une première protubérance (341,342) régulière, ladite première protubérance (341,342) étant agencée pour constituer ladite première attache (321,322,323) par retrait de matière,
∘ une deuxième protubérance (341, 342) régulière, ladite deuxième protubérance (341, 342) étant agencée pour constituer ladite deuxième attache (321, 322, 323) par retrait de matière,
- ledit corps (33) et lesdites première et deuxième protubérances (341,342) sont faits d'une seule pièce.

2. Orthèse dentaire (3) selon la revendication précédente, pour laquelle les première et deuxième protubérances (341,342) sont convexes.

3. Orthèse dentaire (3) selon l'une quelconque des revendications précédentes, pour laquelle la lumière (321g,322g,323g) de chacune desdites première et deuxième attaches (321,322,323) est avantageusement tubulaire de section circulaire ou rectangulaire.

4. Orthèse dentaire (3) selon l'une quelconque des revendications précédentes, pour laquelle la surface externe (33e) du corps (33) est lisse, de sorte qu'elle ne présente aucune aspérité.

## Patentansprüche

1. Zahnorthese (3), die Folgendes umfasst: einen Körper (33) mit einer Innenfläche (33i) und einer Außenfläche (33e), wobei der genannte Körper zum homothetischen Bedecken eines Teils einer Zahnkrone eines Patienten ausgelegt ist, ein erstes und ein zweites Befestigungselement (321, 322, 323), die jeweils ein Loch (321g, 322g, 323g) aufweisen und ohne Freiheitsgrad mit der Außenfläche (33e) des genannten Körpers (33) zusammenwirken, wobei die genannte Zahnorthese (3) **dadurch gekennzeichnet ist, dass**:
- die Innenfläche (33i) des genannten Körpers (33) zum homothetischen Bedecken mindestens eines Teils von drei Flächen der genannten Zahnkrone des genannten Patienten ausgelegt ist, eine erste Fläche, die aus der vestibulären Fläche besteht, eine zweite Fläche, die aus der lingualen Fläche besteht, und eine dritte Fläche, die aus der okklusalen Fläche, der distalen Fläche und der mesialen Fläche ausgewählt ist, wobei das genannte erste Befestigungselement zum Positionieren auf der vestibulären Fläche der Zahnkrone ausgelegt ist und das genannte zweite Befestigungselement zum Positionieren auf der lingualen Fläche der Zahnkrone ausgelegt ist,
- die Außenfläche (33e) des genannten Körpers (33) Folgendes umfasst:
∘ einen ersten regelmäßigen Vorsprung (341, 342), wobei der genannte erste Vorsprung (341, 342) zum Bilden des genannten ersten Befestigungselements (321, 322, 323) durch Materialentfernung ausgelegt ist,
∘ einen zweiten regelmäßigen Vorsprung (341, 342), wobei der genannte zweite Vorsprung (341, 342) zum Bilden des genannten zweiten Befestigungselements (321, 322, 323) durch Materialentfernung ausgelegt ist,
- der genannte Körper (33) und der genannte erste und zweite Vorsprung (341, 342) aus einem einzigen Stück gefertigt sind.

2. Zahnorthese (3) nach dem vorherigen Anspruch, wobei der erste und zweite Vorsprung (341, 342) konvex sind.

3. Zahnorthese (3) nach einem der vorherigen Ansprüche, wobei das Loch (321g, 322g, 323g) des genannten ersten und zweiten Befestigungselements (321, 322, 323) jeweils vorteilhafterweise röhrenförmig mit kreisförmigem oder rechteckigem Querschnitt ist.

4. Zahnorthese (3) nach einem der vorherigen Ansprüche, wobei die Außenfläche (33e) des Körpers (33) glatt ist, so dass sie keine Unebenheiten aufweist.

## Claims

1. Dental orthosis (3), containing a body (33) having an inner surface (33i) and an outer surface (33e), said body being arranged to homothetically cover a portion of a dental crown of a patient, a first and a second bracket (321, 322, 323), each having a channel (321g, 322g, 323g) and cooperating with no degree of freedom with the outer surface (33e) of said body (33), said dental orthosis (3) being **characterized in that**:
- the inner surface (33i) of said body (33) is arranged to homothetically cover at least a portion of three faces of said dental crown of said patient, a first face consisting of the vestibular face, a second face consisting of the lingual face and a third face selected from the occlusal face, the distal face and the mesial face, said first bracket being arranged to be positioned on the vestibular face of the dental crown and said second bracket being arranged to be positioned on the lingual face of the dental crown,
- the outer surface (33e) of said body (33) contains:
∘ a first regular protrusion (341, 342), said first protrusion (341, 342) being arranged to constitute said first bracket (321, 322, 323) by material removal,
∘ a second regular protrusion (341, 342), said second protrusion (341, 342) being arranged to constitute said second bracket (321, 322, 323) by material removal,
- said body (33) and said first and second protrusions (341, 342) are made from a single piece.

2. Dental orthosis (3) according to the preceding claim, in which the first and second protrusions (341, 342) are convex.

3. Dental orthosis (3) according to any one of the preceding claims, in which the channel (321g, 322g, 323g) of each of said first and second brackets (321, 322, 323) is advantageously tubular with a circular or rectangular cross section.

4. Dental orthosis (3) according to any one of the preceding claims, in which the outer surface (33e) of the body (33) is smooth, such that it has no roughness.
